# EUROPEAN PATENT SPECIFICATION

(11) **EP 4 023 537 B1**
(45) Date of publication and mention of the grant of the patent: **13.09.2023**
(21) Application number: 19943386.3
(22) Date of filing: 26.08.2019
(51) Int. Cl.: B62J 37/00, F02M 25/08

(54) **STRADDLE-TYPE VEHICLE**
GRÄTSCHSITZFAHRZEUG
VÉHICULE DE TYPE À ENFOURCHER

(43) Date of publication of application: 06.07.2022
(73) Proprietor: HONDA MOTOR CO., LTD., Minato-ku Tokyo 107-8556 (JP)
(72) Inventor: SANO Takahiro, Tokyo 107-8556 (JP); NAKAMURA Takuro, Tokyo 107-8556 (JP)
(74) Representative: Weickmann & Weickmann PartmbB
(86) International application number: PCT/JP2019/033307
(87) International publication number: WO 2021/038686

(56) References cited:
- JP-A- 2014 061 851
- JP-A- 2015 040 554
- JP-A- 2015 110 381
- JP-A- 2016 008 014
- US-A1- 2015 158 540

## Description

### TECHNICAL FIELD

The present invention relates to a straddle-type vehicle that, when suctioning fuel gas that has been evaporated inside a fuel tank into a canister and supplying this fuel gas to an intake pipe of an engine via a purge pipe, uses a purge control valve to allow or prohibit communication between the canister and the intake pipe.

### BACKGROUND ART

US 2015/158 540 A1 shows a straddle-type vehicle according to the preamble of claim 1.

As an example, JP 5030914 B discloses arranging a canister, which suctions in fuel gas evaporated inside a fuel tank, at the rear of a straddle-type vehicle. Furthermore, JP 2010-229840 A discloses a straddle-type vehicle in which a canister is arranged ahead of a fuel tank, and a purge control valve is provided that allows or prohibits communication in a purge pipe that provides a connection between the canister and an intake pipe. In JP 2010-229840 A, the purge control valve is attached, via a specialized stay, to a rear frame that forms a vehicle body frame.

### SUMMARY OF THE INVENTION

In a straddle-type vehicle, there are cases where a layout is adopted in which the canister is arranged behind the fuel tank, such as shown in JP 5030914 B, due to the relationship with the layout around the fuel tank. In such a case, there is room for improvement in the layout of the purge control valve. When the purge control valve is arranged such as shown in JP 2010-229840 A, for example, the purge control valve is arranged outside the rear frame. In this case, if the canister is arranged behind the fuel tank, the space between the fuel tank and the storage box becomes dead space, and therefore there is further room for improvement in the space efficiency. Furthermore, since the purge control valve is arranged outside the rear frame, there is further room for improvement with regards to protecting the purge control valve from impact or the like from the outside.

The present invention has the object of providing a straddle-type vehicle that can suitably protect the purge control valve from impact or the like from the outside, while effectively utilizing the dead space between the fuel tank and the storage box.

The present invention provides a straddle-type vehicle according to claim 1.

By arranging the purge control valve between the fuel tank and the storage box, it is possible to effectively utilize the dead space between the fuel tank and the storage box. Furthermore, since the purge control valve is surrounded by the fuel tank, the storage box, and the rear frames, it is possible to suitably protect the purge control valve from impacts or the like from the outside.

### BRIEF DESCRIPTION OF DRAWINGS

FIG. 1 is a left side view of a straddle-type vehicle according to the present embodiment;
FIG. 2 is a left side view of a rear portion of the straddle-type vehicle of FIG. 1, shown with a vehicle body cover removed;
FIG. 3 is a left side view of a rear portion of the straddle-type vehicle of FIG. 2, shown with a vehicle body frame removed;
FIG. 4 is a planar view of a region around a storage box and a fuel tank, showing a state with a seat removed; and
FIG. 5 is a planar view of a region around a purge control valve and an ECU.

### DESCRIPTION OF THE INVENTION

The following provides a detailed description of preferred embodiments of the straddle-type vehicle according to the present invention, while referencing the accompanying drawings.

### [1. Schematic Configuration of a Straddle-Type Vehicle 10]

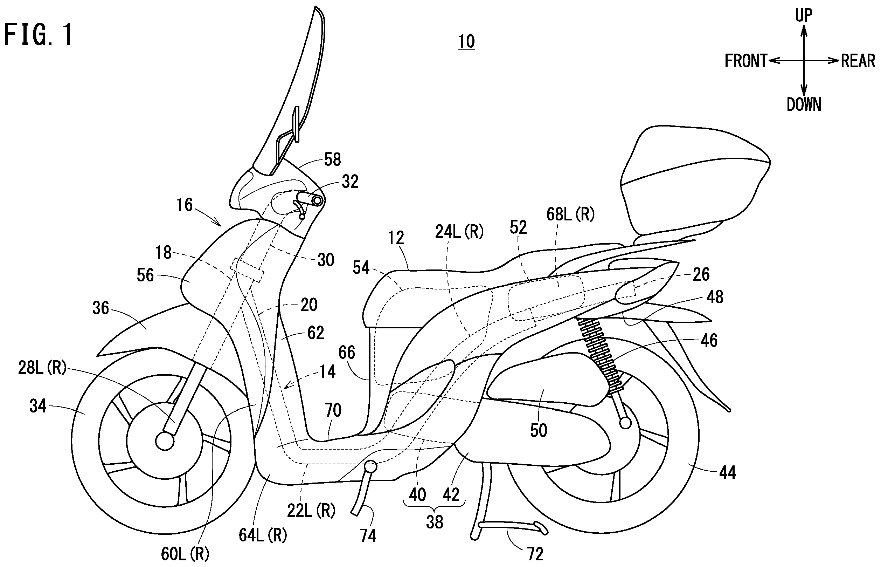

FIG. 1 is a left side view of a straddle-type vehicle 10 according to the present embodiment. In the following description, the front, rear, left, right, up, and down directions are described as seen from a rider sitting on a seat 12 of the straddle-type vehicle 10. Furthermore, configurational elements arranged as left-right pairs in the straddle-type vehicle 10 may be described while affixing an "L" following the reference numeral for left-side configurational elements and affixing an "R" following the reference numeral for right-side configurational elements.

The straddle-type vehicle 10 according to the present embodiment is applied to a scooter type of two-wheel motorcycle shown in FIG. 1. The present embodiment is not limited to the two-wheel motorcycle shown in FIG. 1, and can be applied to various types of straddle-type vehicles.

The straddle-type vehicle 10 according to the present embodiment includes a vehicle body frame 14 and a vehicle body cover 16 that is made of synthetic resin and covers the vehicle body frame 14.

The vehicle body frame 14 includes a head pipe 18 at a front end portion, a down pipe 20 extending diagonally backward and downward from the head pipe 18, a left-right pair of underframes 22L and 22R extending backward from the rear end of the down pipe 20, a left-right pair of rear frames 24L and 24R extending diagonally upward and backward from the rear ends of the left-right pair of underframes 22L and 22R, and a tail pipe portion 26 connecting the rear ends of the left-right pair of rear frames 24L and 24R.

A left-right pair of front forks 28L and 28R are attached to the head pipe 18 in a steerable manner. The top portions of the front forks 28L and 28R are formed as a steering stem 30. A handle 32 is attached to the steering stem 30. A front wheel 34 is attached to the bottom ends of the front forks 28L and 28R. A front fender 36, which covers the front wheel 34 from above, is attached to the front forks 28L and 28R.

A swing type of power unit 38 is supported by the left-right pair of rear frames 24L and 24R. The power unit 38 is obtained by integrally forming an engine 40 on the front side and a swing arm 42 on the rear side. A rear wheel 44 is attached to the rear end of the power unit 38. A rear cushion 46 is connected between the rear end of the power unit 38 and the left-side rear frame 24L. Furthermore, a rear fender 48, which covers the rear wheel 44 from above, is attached to the left-right pair of rear frames 24L and 24R. Yet further, an air cleaner 50 is arranged between the rear fender 48 and the power unit 38.

The left-right pair of rear frames 24L and 24R support the seat 12 on which the rider sits, from below. A fuel tank 52 is supported by the left-right pair of rear frames 24L and 24R and the rear fender 48, in the space below the seat 12 and above the rear wheel 44. Furthermore, a storage box 54 for storing the helmet and the like of the rider is supported by the left-right pair of rear frames 24L and 24R, in the space below the seat 12, in front of the fuel tank 52, and above the power unit 38.

The vehicle body cover 16 covers the vehicle body frame 14 and the like, and includes a front cover 56, a handle cover 58, a left-right pair of front side covers 60L and 60R, a leg shield 62, a left-right pair of floor side covers 64L and 64R, a seat bottom cover 66, a left-right pair of rear side covers 68L and 68R, and the like.

The front cover 56 covers the front end portion of the vehicle body frame 14 such as the head pipe 18, from the front. The handle cover 58 covers a central portion of the handle 32 in the left-right direction, above the front cover 56. The left-right pair of front side covers 60L and 60R are connected to the left and right sides of the front cover 56, and cover the front end portion of the vehicle body frame 14 from the left and right sides. The leg shield 62 is connected to the front cover 56 and the left-right pair of front side covers 60L and 60R, and covers the head pipe 18 and the down pipe 20 from the rear. The seat bottom cover 66 covers the space below the seat 12, from the front.

A low-floor type of floor 70, for the driver sitting on the seat 12 to place their left and right feet on, is arranged in the space between the leg shield 62 and the seat bottom cover 66 and above the left-right pair of underframes 22L and 22R. The left-right pair of floor side covers 64L and 64R form a portion of the floor 70, and cover the left-right pair of underframes 22L, 22R from the left and right sides. The front end portions of the floor side covers 64L and 64R are connected to the front side covers 60L and 60R. The left-right pair of rear side covers 68L and 68R are connected to the rear end portions of the seat bottom cover 66 and floor side covers 64L and 64R, and cover the fuel tank 52 and the like from the left and right sides.

A main stand 72 is installed below the power unit 38. Furthermore, a side stand 74 is installed below the left-side floor side cover 64L.

### [2. Characteristic Configuration of the Present Embodiment]

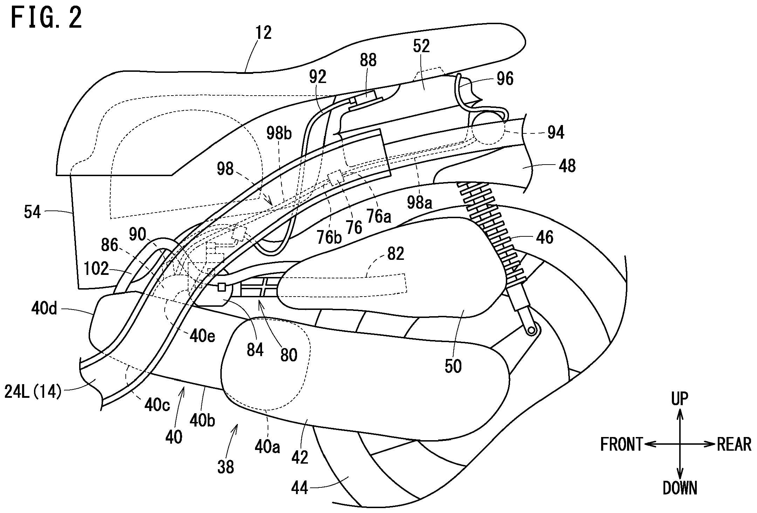

The following describes the characteristic configuration of the straddle-type vehicle 10 according to the present embodiment, while referencing FIGS. 2 to 5. In this description of the characteristic configuration, FIG. 1 will also be referenced as needed.

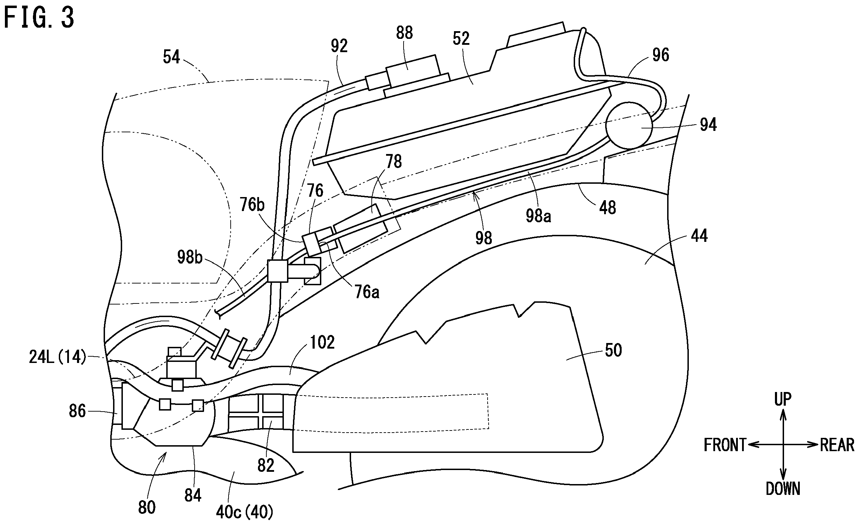

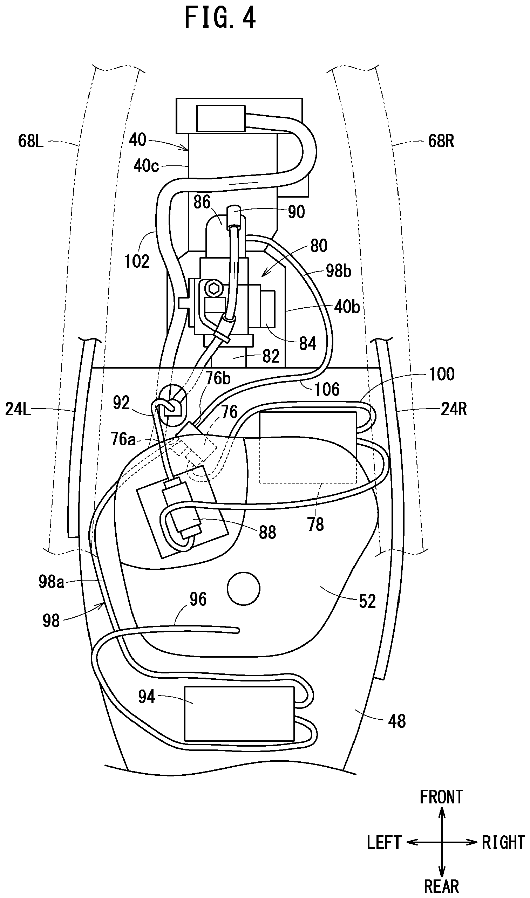

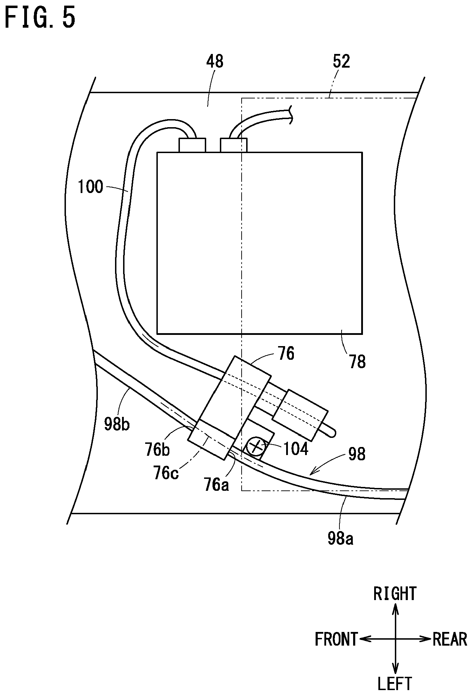

FIG. 2 is a left-side view of a rear portion of the straddle-type vehicle 10, shown with the vehicle body cover 16 removed. FIG. 3 is a left-side view showing a state in which the vehicle body frame 14 has been removed from the rear portion of FIG. 2. FIG. 4 is a planar view of a region around the storage box 54 and fuel tank 52, showing a state in which the seat 12 has been removed. FIG. 5 is a planar view of a region around a purge control valve 76 and ECU 78 (electronic control unit), which are described further below. In FIGS. 2 to 5, in order to simplify the description, configurational elements that are not part of the characteristic configuration are shown in a simplified manner or omitted from the drawings.

A crank case 40a, a cylinder 40b, a cylinder head 40c, and a cylinder head cover 40d are arranged from rear to front in the stated order, in the engine 40 forming the power unit 38. The air cleaner 50 and the cylinder head 40c are connected via an intake path 80. The intake path 80 includes a connecting tube 82 that extends forward from the air cleaner 50, a valve body 84 (throttle body) that is connected to the downstream side of the connecting tube 82 and houses a throttle valve and a throttle drum (not shown in the drawings), and an intake pipe 86 that connects the valve body 84 and an intake port 40e of the engine 40 provided to the cylinder head 40c. Due to this, air (intake) is supplied to the intake port 40e from the air cleaner 50 via the intake path 80.

A fuel pump 88 is provided at the front of the top surface of the fuel tank 52. On the other hand, an injector 90 is provided to the intake pipe 86 of the engine 40. The fuel pump 88 and the injector 90 are connected by a flexible fuel hose 92. Due to this, the fuel inside the fuel tank 52 is supplied to the injector 90 from the fuel pump 88, via the fuel hose 92.

A canister 94 is provided behind the fuel tank 52 on the top surface of the rear fender 48. The canister 94 is a member substantially shaped as a circular pillar, and is arranged in the right-left direction (vehicle width direction) behind the fuel tank 52. An elastic charge pipe 96 is connected between the fuel tank 52 and the canister 94. One end portion of the charge pipe 96 is connected at the rear of the top surface of the fuel tank 52, and the other end portion of the charge pipe 96 is connected to the right side surface of the canister 94. Accordingly, the charge pipe 96 is routed to crawl between the fuel tank 52 and the canister 94. Due to this, the fuel gas evaporated inside the fuel tank 52 is guided and sucked into the canister 94, via the charge pipe 96.

The canister 94 and the intake pipe 86 are connected via a flexible purge pipe 98. One end portion of the purge pipe 98 is connected to the right side surface of the canister 94, and the other end portion of the purge pipe 98 is connected to the intake port 40e side of the intake pipe 86. The purge control valve 76, which allows or prohibits communication between the canister 94 and intake pipe 86 via the purge pipe 98, is provided at some point along the purge pipe 98.

The purge control valve 76 is an electromagnetic valve that is controlled by the ECU 78 (electronic control unit), which controls the various types of electronic equipment of the straddle-type vehicle 10. That is, the ECU 78 and the various types of electronic equipment including the purge control valve 76 are electrically connected via a harness 100. The purge control valve 76 switches between the communication state and the cutoff state to allow or prohibit the communication between the canister 94 and the intake pipe 86, based on a control signal supplied from the ECU 78 via the harness 100.

In this case, the purge pipe 98 is configured to include: an upstream pipe 98a, which connects the right side surface of the canister 94 (one end portion side of the purge pipe 98) and an inlet portion 76a on the upstream side of the purge control valve 76; and a downstream pipe 98b, which connects an outlet portion 76b on the downstream side of the purge control valve 76 and the intake port 40e side of the intake pipe 86 (another end portion side of the purge pipe 98). Accordingly, when the inlet portion 76a and outlet portion 76b of the purge control valve 76 are in the communication state, the fuel gas sucked in by the canister 94 is supplied to the intake pipe 86 from the upstream pipe 98a, via the inlet portion 76a and outlet portion 76b of the purge control valve 76 and the downstream pipe 98b.

A breather hose 102 is connected between the cylinder head 40c and the air cleaner 50. Due to this, blowby gas inside the engine 40 is not released into the atmosphere, and is instead supplied to the air cleaner 50 via the breather hose 102 and supplied as new intake to the engine 40 via the intake path 80. Furthermore, by supplying the blowby gas to the air cleaner 50, it is possible to lower the pressure inside the engine 40.

Here, the characteristic configuration of the straddle-type vehicle 10 according to the present embodiment relates to the arrangement position and the like of the purge control valve 76 inside the straddle-type vehicle 10.

Specifically, the purge control valve 76 is provided at a position in front of the fuel tank 52, behind the storage box 54, and overlapping with the rear frames 24L and 24R in the side view of FIGS. 2 and 3. Furthermore, the purge control valve 76 is arranged on the left side of the fuel tank 52 on the top surface of the rear fender 48 such that an axial line 76c connecting the inlet portion 76a and outlet portion 76b is oriented diagonally forward and to the right, in the planar views of FIGS. 4 and 5. In addition, the purge control valve 76 is fixed to the top surface of the rear fender 48 with a fastening means 104 such as a screw, for example.

Therefore, as shown in FIGS. 2 to 5, the purge pipe 98 is routed further inward in the vehicle width direction of the straddle-type vehicle 10 than the left-right pair of rear frames 24L and 24R. Furthermore, the purge pipe 98 is routed in a manner to pass through the left side (one side), in the vehicle width direction, of the straddle-type vehicle 10. Accordingly, the upstream pipe 98a passes between the rear portion of the fuel tank 52 and the canister 94 from the right side surface of the canister 94, and travels along the left side surface of the fuel tank 52 to arrive at the inlet portion 76a of the purge control valve 76.

The power unit 38 is arranged in a central portion of the straddle-type vehicle 10 in the vehicle width direction, in front of the fuel tank 52. Therefore, the downstream pipe 98b passes above the connecting tube 82 and in front of the fuel tank 52, from the outlet portion 76b of the purge control valve 76, and then passes by the right side of the intake path 80 to arrive at the connecting portion on the right side of the intake pipe 86. In other words, the connecting portion that connects the downstream pipe 98b and the intake pipe 86 is provided further to the right side (another side) in the vehicle width direction than the purge control valve 76 is. As described further above, the purge control valve 76 is provided to the rear fender 48 in such a way that the axial line 76c connecting the inlet portion 76a and the outlet portion 76b is inclined forward and to the right, and therefore a portion of the downstream pipe 98b is formed as a flexing portion 106 that bends on the right side in the vehicle width direction of the connecting tube 82.

On the other hand, the ECU 78 is arranged adjacent on the right to the purge control valve 76, on the top surface of the rear fender 48, in front of the fuel tank 52, and behind the storage box 54. Furthermore, the fuel hose 92 extends forward from the fuel pump 88, passes by the left side of the connecting tube 82 in the vehicle width direction and above the valve body 84, and arrives at the injector 90.

### [3. Effects of the Present Embodiment]

As described above, the straddle-type vehicle 10 includes a vehicle body frame 14; an engine 40 mounted on the vehicle body frame 14; a fuel tank 52; a canister 94 that suctions in fuel gas that has been evaporated inside the fuel tank 52; a charge pipe 96 that connects the fuel tank 52 and the canister 94, and guides the fuel gas to the canister 94; a purge pipe 98 that connects the canister 94 and an intake pipe 86 of the engine 40, and supplies the fuel gas suctioned in by the canister 94 to the intake pipe 86; and a purge control valve 76 that is provided at some point along the purge pipe 98 and allows or prohibits communication between the canister 94 and the intake pipe 86.

In this case, the purge control valve 76 is provided at a position in front of the fuel tank 52, behind the storage box 54 of the straddle-type vehicle 10, and overlapping, in a side view, rear frames 24L, 24R forming the vehicle body frame 14.

In this way, by arranging the purge control valve 76 between the fuel tank 52 and the storage box 54, it is possible to effectively utilize the dead space between the fuel tank 52 and the storage box 54. Furthermore, since the purge control valve 76 is surrounded by the fuel tank 52, the storage box 54, and the rear frames 24L and 24R, it is possible to suitably protect the purge control valve 76 from impacts or the like from the outside.

In this case, the purge pipe 98 is routed further inward in a vehicle width direction of the straddle-type vehicle 10 than the rear frames 24L, 24R. Therefore, the purge pipe 98 does not straddle the rear frames 24L and 24R. Due to this, the overall length of the purge pipe 98 can be shortened. Furthermore, the vehicle body frame 14, more specifically an edge portion of the vehicle body frame 14, can be prevented from contacting the purge pipe 98.

Furthermore, the purge pipe 98 is routed to pass through the left side (one side), in a vehicle width direction, of the straddle-type vehicle 10. Yet further, a connecting portion connecting the purge pipe 98 and the intake pipe 86 is provided further to the right side (another side) in the vehicle width direction than the purge control valve 76 is. In this case, the purge control valve 76 includes an inlet portion 76a, which is supplied with the fuel gas from the canister 94, and an outlet portion 76b, which supplies the fuel gas to the intake pipe 86. An axial line 76c connecting the inlet portion 76a and the outlet portion 76b is provided in such a way that the outlet portion 76b is inclined more to the right side in the vehicle width direction than the inlet portion 76a, relative to a front-rear direction of the straddle-type vehicle 10.

Due to this, it is possible to further shorten the overall length of the purge pipe 98. Furthermore, since the purge pipe 98 crawls along the left side surface of the fuel tank 52, it is necessary for the purge pipe 98 to crawl toward the central portion in the vehicle width direction. As described above, by arranging the purge control valve 76 in such a way that the outlet portion 76b faces inward (right side) in the vehicle width direction relative to the inlet portion 76a, the purge pipe 98 can be routed toward the central portion in the vehicle width direction.

Furthermore, the straddle-type vehicle 10 further comprises the ECU 78 (electronic control unit) that is provided in front of the fuel tank 52 and behind the storage box 54, and controls at least the purge control valve 76. In this case, the purge control valve 76 is arranged adjacent to the ECU 78. Due to this, the harness 100 that connects the purge control valve 76 and the ECU 78 can be shortened.

Furthermore, the purge control valve 76 is provided to a rear fender 48 forming the straddle-type vehicle 10. Due to this, there is no need for a specialized stay or the like for fixing the purge control valve 76.

Furthermore, the straddle-type vehicle 10 further includes the valve body (throttle body) 84 connected to the intake pipe 86; the air cleaner 50; the connecting tube 82 that connects the air cleaner 50 and the valve body 84 (throttle body); and the fuel hose 92 that connects the fuel tank 52 and the injector 90 of the engine 40. In this case, the fuel hose 92 passes by the left side (one side), in the vehicle width direction of the straddle-type vehicle 10, of the connecting tube 82 and passes above the valve body 84. Furthermore, a portion of the downstream pipe 98b of the purge pipe 98 (downstream side of the purge control valve 76) is formed as a flexing portion 106 that bends on the right side (another side), in the vehicle width direction, of the connecting tube 82.

In the manner described above, the layout is provided where the purge control valve 76 effectively utilizes the dead space, and since the purge pipe 98 is routed in accordance with this layout, the space efficiency is increased. Furthermore, by providing the flexing portion 106 of the purge pipe 98 in the dead space, it is possible to optimize the layout of the purge control valve 76. In other words, in a case where the throttle drum is arranged on the right side of the valve body 84 in the vehicle width direction, it is necessary to arrange the downstream pipe 98b on the right side in the vehicle width direction near the valve body 84. Accordingly, by forming a portion of the downstream pipe 98b as the flexing portion 106, it is possible to suitably arrange the purge control valve 76 while suitably routing the downstream pipe 98b.

The above describes the present invention using preferred embodiments, but the technological scope of the present invention is not limited to the above-described embodiments. In the above embodiments, it is clear to those skilled in the art that various modifications or additions could be adopted within the scope of protection only defined by the appended claims. Furthermore, the parenthesized reference numerals described in the claims are attached corresponding to the reference numerals in the accompanying drawings for the sake of facilitating understanding of the present invention, and the present invention is not to be interpreted as being limited to the elements to which the reference numerals are given.

## Claims

1. A straddle-type vehicle (10) comprising:
a vehicle body frame (14);
an engine (40) mounted on the vehicle body frame (14);
a fuel tank (52);
a canister (94) that suctions in fuel gas that has been evaporated inside the fuel tank (52);
a charge pipe (96) that connects the fuel tank (52) and the canister (94), and guides the fuel gas to the canister (94);
a purge pipe (98) that connects the canister (94) and an intake pipe (86) of the engine (40), and supplies the fuel gas suctioned in by the canister (94) to the intake pipe (86);
a purge control valve (76) that is provided at a point along the purge pipe (98) at a position in front of the fuel tank (52) and behind a storage box (54) of the straddle-type vehicle (10), and allows or prohibits communication between the canister (94) and the intake pipe (86); and
an electronic control unit (78) that controls at least the purge control valve (76),
**characterized in that**
the purge control valve (76) overlaps, in a side view, rear frames (24L, 24R) forming the vehicle body frame (14); and
the purge control valve (76) is arranged adjacent to the electronic control unit (78) provided in front of the fuel tank (52) and behind the storage box (54).

2. The straddle-type vehicle (10) according to claim 1,
the purge pipe (98) is routed to pass through one side, in a vehicle width direction, of the straddle-type vehicle (10);
a connecting portion connecting the purge pipe (98) and the intake pipe (86) is provided further to another side in the vehicle width direction than the purge control valve (76);
the purge control valve (76) includes an inlet portion (76a) that is supplied with the fuel gas from the canister (94), and an outlet portion (76b) that supplies the fuel gas to the intake pipe (86); and
an axial line (76c) connecting the inlet portion (76a) and the outlet portion (76b) is provided in a manner that the outlet portion (76b) is inclined more to the another side in the vehicle width direction than the inlet portion (76a), relative to a front-rear direction of the straddle-type vehicle (10).

3. The straddle-type vehicle (10) according to claim 1 or 2, wherein:
the purge pipe (98) is routed further inward in a vehicle width direction of the straddle-type vehicle (10) than the rear frames (24L, 24R) are.

4. The straddle-type vehicle (10) according to any one of claims 1 to 3, wherein:
the purge control valve (76) is provided to a rear fender (48) forming the straddle-type vehicle (10).

5. The straddle-type vehicle (10) according to any one of claims 1 to 4, further comprising:
a throttle body (84) connected to the intake pipe (86);
an air cleaner (50);
a connecting tube (82) that connects the air cleaner (50) and the throttle body (84); and
a fuel hose (92) that connects the fuel tank (52) and an injector (90) of the engine (40), wherein:
the fuel hose (92) passes by one side, in a vehicle width direction of the straddle-type vehicle (10), of the connecting tube (82) and passes above the throttle body (84); and
a portion of the purge pipe (98) on a downstream side of the purge control valve (76) is formed as a flexing portion (106) that bends on another side, in the vehicle width direction, of the connecting tube (82).

## Patentansprüche

1. Grätschsitzfahrzeug (10), umfassend:
einen Fahrzeugrumpfrahmen (14);
einen Motor (40), der an dem Fahrzeugrumpfrahmen (14) angebracht ist;
einen Kraftstofftank (52);
einen Kanister (94), der Brenngas ansaugt, das innerhalb des Kraftstofftanks (52) verdampft worden ist;
ein Laderohr (96), das den Kraftstofftank (52) mit dem Kanister (94) verbindet und das Brenngas zu dem Kanister (94) leitet;
ein Spülrohr (98), das den Kanister (94) mit einem Einlassrohr (86) des Motors (40) verbindet und das von dem Kanister (94) eingesaugte Brenngas dem Einlassrohr (86) zuführt;
ein Spülsteuerventil (76), das an einem Punkt entlang dem Spülrohr (98) an einer Position vor dem Kraftstofftank (52) und hinter einem Aufbewahrungskasten (54) des Grätschsitzfahrzeugs (10) vorgesehen ist und eine Verbindung zwischen dem Kanister (94) und dem Einlassrohr (86) erlaubt oder verhindert; und
eine elektronische Steuereinheit (78), die zumindest das Spülsteuerventil (76) steuert,
**dadurch gekennzeichnet, dass**
das Spülsteuerventil (76), in Seitenansicht, den Fahrzeugrumpfrahmen (14) bildende Heckrahmen (24L, 24R) überlappt; und
das Spülsteuerventil (76) benachbart der elektronischen Steuereinheit (78) angeordnet ist, die vor dem Kraftstofftank (52) und hinter dem Aufbewahrungskasten (54) vorgesehen ist.

2. Das Grätschsitzfahrzeug (10) nach Anspruch 1,
wobei das Spülrohr (98) so verlegt ist, dass es, in Fahrzeugbreitenrichtung, eine Seite des Grätschsitzfahrzeugs (10) durchläuft;
ein Verbindungsabschnitt, der das Spülrohr (98) mit dem Einlassrohr (86) verbindet, in der Fahrzeugbreitenrichtung weiter an der anderen Seite vorgesehen ist als das Spülsteuerventil (76);
das Spülsteuerventil (76) einen Einlassabschnitt (76a), der mit dem Brenngas von dem Kanister (94) versorgt wird, sowie einen Auslassabschnitt (76b), der das Brenngas dem Einlassrohr (86) zuführt, enthält; und
eine axiale Linie (76c), die den Einlassabschnitt (76a) mit dem Auslassabschnitt (76b) verbindet, derart liegt, dass der Auslassabschnitt (76b), relativ zu einer Vorne-Hinten-Richtung des Grätschsitzfahrzeugs (10), in der Fahrzeugbreitenrichtung weiter zur anderen Seite hin geneigt ist als der Einlassabschnitt (76a).

3. Das Grätschsitzfahrzeug (10) nach Anspruch 1 oder 2, wobei:
das Spülrohr (98), in Fahrzeugbreitenrichtung des Grätschsitzfahrzeugs (10), weiter einwärts verlegt ist als die Heckrahmen (24L, 24R) sind.

4. Das Grätschsitzfahrzeug (10) nach einem der Ansprüche 1 bis 3, wobei:
das Spülsteuerventil (76) an einem das Grätschsitzfahrzeug (10) bildenden Heckfender (48) vorgesehen ist.

5. Das Grätschsitzfahrzeug (10) nach einem der Ansprüche 1 bis 4, das ferner aufweist:
einen Drosselkörper (84), der mit dem Einlassrohr (86) verbunden ist;
einen Luftfilter (50);
ein Verbindungsrohr (82), das den Luftfilter (50) mit dem Drosselkörper (84) verbindet; und
einen Kraftstoffschlauch (92), der den Kraftstofftank (52) mit einem Injektor (90) des Motors (40) verbindet, wobei:
der Kraftstoffschlauch (92), in Fahrzeugbreitenrichtung des Grätschsitzfahrzeugs (10), an einer Seite des Verbindungsrohrs (82) verläuft und über dem Drosselkörper (84) verläuft; und
ein Abschnitt des Spülrohrs (98) an einer stromabwärtigen Seite des Spülsteuerventils (76) als Biegeabschnitt (106) ausgebildet ist, der sich in der Fahrzeugbreitenrichtung an der anderen Seite des Verbindungsrohrs (82) biegt.

## Revendications

1. Véhicule de type à enfourcher (10) comprenant :
un châssis de carrosserie de véhicule (14) ;
un moteur (40) monté sur le châssis de carrosserie de véhicule (14) ;
un réservoir de carburant (52) ;
un absorbeur de vapeur (94) qui aspire le gaz de combustion qui s'est évaporé à l'intérieur du réservoir de carburant (52) ;
un conduit de charge (96) qui relie le réservoir de carburant (52) et l'absorbeur de vapeur (94), et guide le gaz de combustion vers l'absorbeur de vapeur (94) ;
un conduit de purge (98) qui relie l'absorbeur de vapeur (94) et un conduit d'admission (86) du moteur (40), et fournit le gaz de combustion aspiré par l'absorbeur de vapeur (94) au conduit d'admission (86) ;
une soupape de commande de purge (76) qui est prévue en un point le long du conduit de purge (98) à une position devant le réservoir de carburant (52) et derrière une boîte de stockage (54) du véhicule de type à enfourcher (10), et permet ou interdit la communication entre l'absorbeur de vapeur (94) et le conduit d'admission (86) ; et
une unité de commande électronique (78) qui commande au moins la soupape de commande de purge (76),
**caractérisé en ce que**
la soupape de commande de purge (76) chevauche, dans une vue latérale, des châssis arrière (24L, 24R) formant le châssis de carrosserie de véhicule (14) ; et
la soupape de commande de purge (76) est disposée adjacente à l'unité de commande électronique (78) prévue devant le réservoir de carburant (52) et derrière la boîte de stockage (54).

2. Véhicule de type à enfourcher (10) selon la revendication 1,
le conduit de purge (98) est acheminé pour traverser un côté, dans une direction de la largeur du véhicule, du véhicule de type à enfourcher (10) ;
une partie de liaison reliant le conduit de purge (98) et le conduit d'admission (86) est prévue plus loin d'un autre côté dans une direction de la largeur du véhicule que la soupape de commande de purge (76) ;
la soupape de commande de purge (76) comporte une partie d'entrée (76a) qui est alimentée en gaz de combustion depuis l'absorbeur de vapeur (94), et une partie de sortie (76b) qui fournit le gaz de combustion au conduit d'admission (86) ; et
une ligne axiale (76c) reliant la partie d'entrée (76a) et la partie de sortie (76b) est prévue de manière à ce que la partie de sortie (76b) soit plus inclinée vers l'autre côté dans une direction de la largeur du véhicule que la partie d'entrée (76a), par rapport à une direction avant-arrière du véhicule de type à enfourcher (10).

3. Véhicule de type à enfourcher (10) selon la revendication 1 ou 2, dans lequel :
le conduit de purge (98) est acheminé davantage vers l'intérieur dans une direction de la largeur du véhicule du véhicule de type à enfourcher (10) que ne le sont les châssis arrière (24L, 24R).

4. Véhicule de type à enfourcher (10) selon l'une quelconque des revendications 1 à 3, dans lequel :
la soupape de commande de purge (76) est prévue sur une aile arrière (48) formant le véhicule de type à enfourcher (10).

5. Véhicule de type à enfourcher (10) selon l'une quelconque des revendications 1 à 4, comprenant en outre :
un corps de papillon (84) relié au conduit d'admission (86) ;
un purificateur d'air (50) ;
un tube de liaison (82) qui relie le purificateur d'air (50) et le corps de papillon (84) ; et
un tuyau de carburant (92) qui relie le réservoir de carburant (52) et un injecteur (90) du moteur (40), dans lequel :
le tuyau de carburant (92) passe d'un côté, dans une direction de la largeur du véhicule du véhicule de type à enfourcher (10), du tube de liaison (82) et passe au-dessus du corps de papillon (84) ; et
une partie du conduit de purge (98) sur un côté aval de la soupape de commande de purge (76) est formée comme étant une partie flexible (106) qui se plie sur un autre côté, dans une direction de la largeur du véhicule, du tube de liaison (82).
